# EUROPEAN PATENT APPLICATION

(11) **EP 4 628 856 A1**
(43) Date of publication of application: **08.10.2025**
(21) Application number: 25164429.0
(22) Date of filing: 18.03.2025
(51) Int. Cl.: G01H 1/00, G01M 13/045, B60W 50/02

(54) **PREDICTION AND IDENTIFICATION OF POTENTIAL SEMI-TRAILER TRUCK SYSTEM ANOMALIES**

(30) Priority: 22.03.2024 US 202418613303
(71) Applicant: Robert Bosch GmbH, 70442 Stuttgart (DE)
(72) Inventor: El-Gammal, Mohamed, Windsor, Ontario, N9B 3W4 (CA); Zybell, Juergen, Novi, MI, 48374 (US)

(57) **Abstract**

Systems and methods for predicting anomalies in a wheel system of a semi-trailer truck. One example system includes: a vibration sensor positioned to sense vibrations of the wheel system and an electronic processor communicatively coupled to the vibration sensor. The electronic processor is configured to determine a velocity profile of the semi-trailer truck; obtain a vibration measurement; determine, from the vibration measurement, a classified vibration level; determine whether the classified vibration level is indicative of an anomaly; identify, based on whether the classified vibration level is indicative of the anomaly and both the velocity profile and a reference classified vibration level, an anomaly existing within either or both of the semi-trailer truck wheel system or the road; and perform a mitigation action in response to identifying the anomaly.

## Description

### BACKGROUND

A semi-tractor unit (also known as a truck unit or semi) is a heavy-duty towing engine that provides motive power for hauling a towed or trailered load for transferring goods.

### SUMMARY

Over time, a semi-tractor and/or one or more semi-trailers towed by the semi-tractor (referred to collectively herein as a semi-trailer truck) may experience degradation or other anomalies in its component systems. In addition, the road, upon which the semi-trailer truck is driven, may be substandard. For example, the semi-trailer truck may experience bearing wear, braking system defects, loose wheels, and the like. The road itself may experience cracking, warping, potholes, and the like. Anomalies near the wheels of the semi-trailer truck or the road may result in damage to the semi-trailer truck.

It would be beneficial if semi-trailer truck (for example, wheel, axle, powertrain, etc. ) and road anomalies could be detected early to help avoid damage. Accordingly, examples and aspects described herein provide, among other things, a system and a method for utilizing a machine and deep learning system to predict anomalies of a semi-trailer truck and road via a vibration sensor and, in some instances, using collected data from a network of semi-trailer trucks.

In some aspects, the techniques described herein relate to a system for predicting anomalies in a wheel system of a semi-trailer truck and a road upon which the semi-trailer truck is driven, the system including: a vibration sensor positioned to sense vibrations of the wheel system; and an electronic processor communicatively coupled to the vibration sensor, the electronic processor configured to: determine a velocity profile of the semi-trailer truck; obtain a vibration measurement; determine, from the vibration measurement, a classified vibration level; determine whether the classified vibration level is indicative of an anomaly; identify, based on whether the classified vibration level is indicative of the anomaly and both the velocity profile and a reference classified vibration level, an anomaly existing within either or both of the semi-trailer truck wheel system or the road; and perform a mitigation action in response to identifying the anomaly.

In some aspects, the techniques described herein relate to a method for predicting anomalies in a wheel system of a semi-trailer truck and a road upon which the semi-trailer truck is driven, the method including: determining, with an electronic processor, a velocity profile of the semi-trailer truck; obtaining, from a vibration sensor positioned to sense vibrations of the wheel system, a vibration measurement; determining, from the vibration measurement, a classified vibration level; determining whether the classified vibration level is indicative of an anomaly; identifying, based on whether the classified vibration level is indicative of the anomaly and both the velocity profile and a reference classified vibration level, an anomaly existing within either or both of the semi-trailer truck wheel system or the road; and performing a mitigation action in response to identifying the anomaly.

Other aspects, features, and examples will become apparent by consideration of the detailed description and accompanying drawings.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate examples and aspects of concepts that include the claimed subject matter, and explain various principles and advantages of various aspects and examples.
FIG. 1 is a block diagram of a semi-trailer truck wheel anomaly detection system, in accordance with some aspects.
FIG. 2A is a semi-trailer truck wheel system of the system of FIG. 1 in accordance with some aspects.
FIG. 2B is a semi-truck wheel system of the system of FIG. 1 in accordance with some aspects.
FIG. 3 schematically illustrates an electronic controller of the system of FIG. 1, in accordance with some aspects.
FIG. 4 is a flowchart of an example method for predicting an anomaly within a semi-trailer truck of FIG. 1 and a road on which the semi-truck is driving on, in accordance with some aspects.
FIG. 5A is a flowchart of identifying an anomaly performed by the system of FIG. 1, in accordance with some aspects.
FIG. 5B is a flowchart of identifying an anomaly performed by the system of FIG. 1, in accordance with some aspects.
FIG. 5C is a flowchart of identifying an anomaly performed by the system of FIG. 1, in accordance with some aspects.
FIG. 6 a vibration signal classifier for predicting an anomaly with a road on which the semi-trailer truck of FIG. 1 is driven on, in accordance with some aspects.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of examples and aspects.

The apparatus and method components have been represented where appropriate by conventional symbols in the drawings, showing only those specific details that are pertinent to understanding the examples so as not to obscure the disclosure with details that will be readily apparent to those of ordinary skill in the art having the benefit of the description herein.

### DETAILED DESCRIPTION

Before any embodiments, examples, aspects, and features are explained in detail, it is to be understood that they are not limited in their application to the details of construction and the arrangement of components set forth in the following description or illustrated in the following drawings. Other embodiments, examples, aspects, and features are possible, and they are capable of being practiced or of being carried out in various ways.

For ease of description, some or all of the example systems presented herein are illustrated with a single exemplar of each of its component parts. Some examples may not describe or illustrate all components of the systems. Other examples may include more or fewer of each of the illustrated components, may combine some components, or may include additional or alternative components.

It will be appreciated that some examples may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e. g. , comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory.

It should be understood that although certain drawings illustrate hardware and software located within particular devices, these depictions are for illustrative purposes only. In some examples, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among multiple different devices. Accordingly, in the claims, if an apparatus, method, or system is claimed, for example, as including a controller, control unit, electronic processor, computing device, logic element, module, or other element configured in a certain manner, for example, to perform multiple functions, the claim or claim element should be interpreted as meaning one or more of such elements where any one of the one or more elements is configured as claimed, for example, to make any one or more of the recited multiple functions, such that the multiple elements, as a set in a collective nature, perform the multiple functions.

Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect. The term "predetermined" means specified prior to an event. Also, electronic communications and notifications may be performed using any known means including direct connections (e. g. , wired or optical), wireless connections, or other communication.

Furthermore, the systems and methods described herein may be used independently (e. g. , as alternatives) or in various combinations. The systems and methods described herein may be used with any kind of semi-trailer truck, including those that are not towing a trailer or load. Semi-trailer trucks described herein may be capable of operating autonomously, being controlled manually by a driver, or operate via combination of manual and autonomous control (for example, autonomous control under limited conditions or for limited functions. The term "driver," as used herein, generally refers to an occupant of who is seated in the driver's position, operates the controls of the semi-trailer truck while in a manual mode, or provides control input to the semi-trailer truck to influence the operation of the semi-trailer truck (for example, remotely controlling the semi-trailer truck).

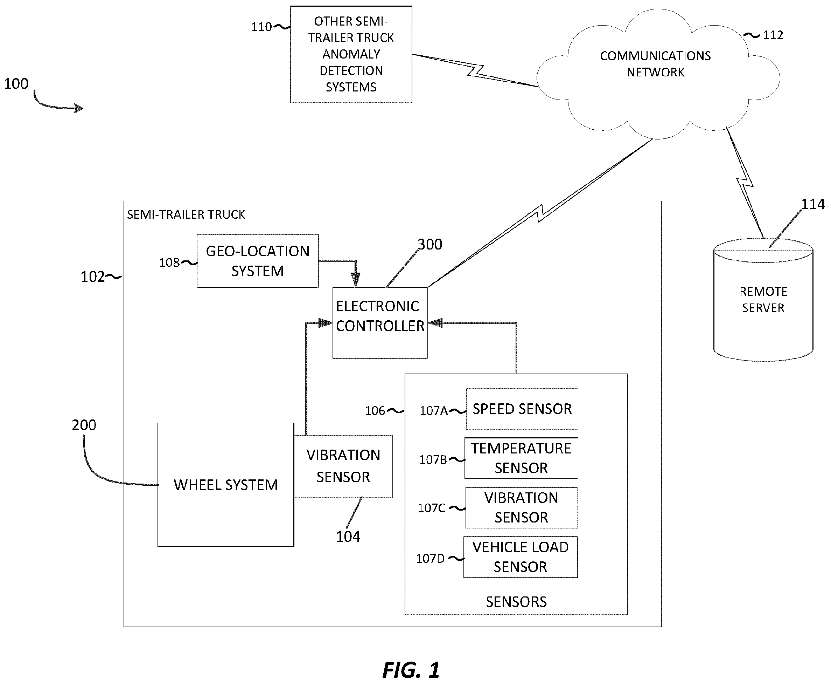

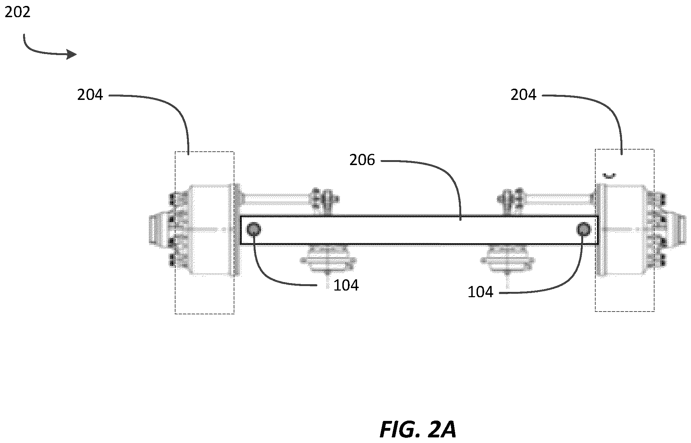

FIG. 1 illustrates a semi-trailer truck anomaly detection system 100 for detecting/predicting an anomaly in a wheel system 200 of a semi-trailer truck 102 according to some embodiments. The semi-trailer truck 102, as described herein, includes a semi-truck that is towing a semi-trailer unit (which may be an open or enclosed unit). As described herein, the wheel system 200 includes multiple wheel sets (e. g. , the wheel set 202 illustrated in FIG. 2A), some of which are included in the semi-truck and some of which are included in one or more semi-trailers, of the semi-trailer truck 102.

In the example illustrated, the semi-trailer truck anomaly detection system 100 includes an electronic controller 300 and at least one vibration sensor 104. The system 100 may also include one or more additional sensors 106. In some instances, the system 100 also includes a geo-location system 108.

In some instances, the system 100 is wirelessly communicatively coupled to one or more other semi-trailer truck anomaly detection systems 110 of one or more other semi-trailer trucks (not shown) via a communications network 112. The other semi-trailer truck anomaly detection systems 110 are configured similarly to the system 100 and perform similar functions to the system 100 as described herein for a respective semi-trailer truck. The components of the system 100, along with other various modules and components are electrically coupled to each other by or through one or more control or data buses, which enable communication therebetween. For example, in some instances, the components of the system 100 communicate according to a Controller Area Network (CAN^{™}) protocol. In some instances, one or more of the buses include an Ethernet^{™}, a FlexRay^{™} communications bus, or another suitable wired bus. In alternative instances, some or all of the components of the system 100 may be communicatively coupled using suitable wireless modalities (for example, Bluetooth^{™}). For ease of description, the system 100 illustrated in FIG. 1 includes one of each of the foregoing components. Alternative instances may include one or more of each component or may exclude or combine some components.

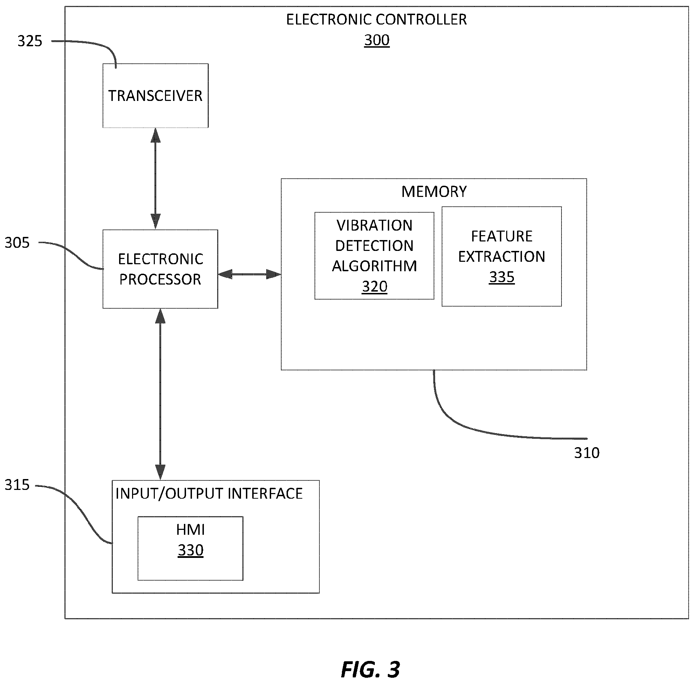

The electronic controller 300 (described more particularly below with respect to FIG. 3) evaluates information from the vibration sensor 104 (and the sensors 106) to detect/predict a potential anomaly of the semi-trailer truck 102 (for example, within the wheel system 200) and/or of a road upon which the semi-trailer truck 102 is driven.

In some embodiments, the system 100 also includes a remote server 114 communicatively coupled to the electronic controller 300 of the semi-trailer truck 102 via the communications network 112. The server 114 may include components similar to those of the electronic controller 300 (described in more detail below with respect to FIG. 3). In some embodiments, some or all of the components and functionality of the electronic controller 300 described herein may be integrated into the remote server 114.

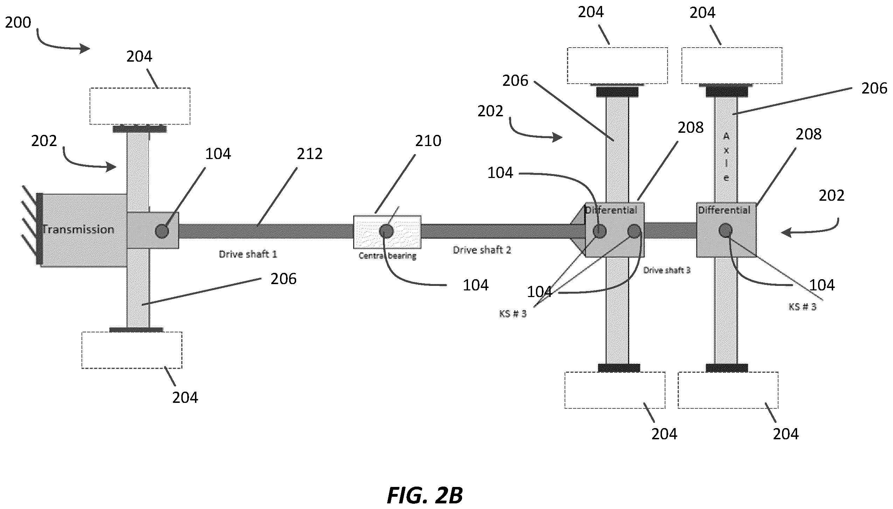

FIG. 2A illustrates a wheel set 202 of the wheel system 200, in accordance with some examples. The wheel system 200 includes a plurality of wheel sets 202, each wheel set 202 including at least two wheels 204 mounted on an axle 206, opposite to one another. The wheel set 202 may also include a differential (for example, the differentials 208 of FIG. 2B). The wheel system 200, in some embodiments, may include an electric drive system, which is not shown. Both wheels 204 may each include one or more vibration sensors 104 (e. g. , wheel sensors), mounted at the respective wheels 204 on the axle 206, as illustrated in FIG. 2A.

FIG. 2B illustrates a portion of the wheel system 200 deployed on the semi-truck portion of the semi-trailer truck 102. As noted above with respect to FIG. 2A, in some examples, the vibration sensors 104 are wheel sensors. As shown in FIG. 2B, one or more vibration sensors 104 may alternatively or additionally be deployed at a center of a respective axle 206 (for example, at the differential 208 of the axle 206). Alternatively, or additionally, one or more of the vibration sensors 104 may be deployed at a central bearing 210 of a driveshaft 212 (e. g. , as a driveshaft sensor). For ease of description, anomaly detection/prediction methods are described herein in terms of a single wheel 204 and a single vibration sensor 104. It should be understood, however, that the controller 300 may perform similar methods for any other wheel 204 of the semi-trailer truck 102 using any one or more of the vibration sensors 104. Additionally, as explained in more detail below, the controller 300 may evaluate vibration measurements from one or more of the vibration sensors 104 at one or more of the differentials 208, central bearings 210, or some combination thereof to identify potential anomalies with the driveshaft 212 or some other component within the wheel system 200 and/or of the road upon which the semi-trailer truck 102 is driven.

Returning to FIG. 1, the vibration sensor 104 (and, in some instances, the other sensors 106) determine one or more attributes of the semi-trailer truck 102 and communicate information regarding those attributes to the other components of the system 100 using, for example, electrical signals. The vibration sensor 104 is configured to detect one or more vibrations within the wheel system 200. In some instances, the vibration sensor 104 is a transducer capable of sensing vibrations in a semi-trailer truck component, converting the vibrations to electrical signals, and transmitting the electrical signals to the electronic controller 300 as sensor information. In some examples, the sensor 104 is positioned such that it detects vibrations where a wheel (for example, the wheel 204) and a respective end of the wheel axle (for example, the wheel axle 206) are coupled together (for example, as shown in FIG. 2A). In some examples, the sensor 104 is positioned such that it detects vibrations of a drive shaft (for example, as shown in FIG. 2B). In some instances, the vibration sensor 104 may be integrated into the wheel 204 or the wheel axle 206. In some examples, more than one of the vibration sensor 104 may be utilized in the systems and methods described herein. For example, as shown in FIG. 2A, a second vibration sensor 104 may be positioned at the wheel 204. In such instances, the second vibration sensor 104 may be configured to measure vibrations in the same or a similar direction as the other vibration sensor 104. Alternatively or additionally, in some instances, each of the vibration sensors 104 are configured to measure vibrations in different directions.

In some instances, the vibration sensor 104 is integrated into another sensor of the semi-trailer truck 102 (for example, one or more of the other sensors 106). For example, the sensor 104 may be integrated into an accelerometer or a speed sensor. In some instances, the sensor 104 is part of a strain gauge, an eddy-current sensor, a gyroscope, a microphone, or another suitable sensor. In some instances, multiple sensors are used, for example, mounted at different points on the semi-trailer truck 102 (for example, proximate to the wheel 204).

As described herein, the electronic controller 300 processes the electrical signals received from the vibration sensor 104 to produce vibration signal information related to the wheel system 200, which may be analyzed to determine/identify a potential anomaly that is causing the particular vibration. In some instances, the sensor 104 includes on-board signal processing circuitry, which produces and transmits sensor information including vibration measurements to the electronic controller 300 for processing. The electronic controller 300 receives and interpret the signals received from the vibration sensor 104 (and, in some instances, one or more of the other sensors 106) to automatically detect/predict and identify an anomaly of the semi-trailer truck 102.

In addition to the vibration sensor 104, the system 100 may include one or more other sensors 106. The sensors 106 determine one or more attributes of the semi-trailer truck 102 and its surrounding environment and communicate information regarding those attributes to the other components of the system 100 using, for example, electrical signals. The semi-trailer truck attributes include, for example, the position of the semi-trailer truck 102 or portions or components of the semi-trailer truck 102, the movement of the semi-trailer truck 102 or portions or components of the semi-trailer truck 102, a temperature of one or more components of the semi-trailer truck 102 or of the environment surrounding the semi-trailer truck 102, semi-trailer truck speed, and the like. The sensors 106 may include, for example, a speed sensor 107A, an ambient temperature sensor 107B, an additional vibration sensor 107C, and a semi-trailer truck load sensor 107D, as illustrated in FIG. 1.

In some instances, the system 100 includes, in addition to the sensors 106, a geo-location system 108. The geo-location system 108 receives radio frequency signals from orbiting satellites using one or more antennas and receivers (not shown). The geo-location system 108 determines geo-spatial positioning (i. e. , latitude, longitude, altitude, and speed) for the semi-trailer truck 102 based on the received radio frequency signals. The geo-location system 108 communicates this positioning information to the electronic controller 300. The geo-location system 108 may be or include, for example, a global navigation satellite system (GNSS), a global positioning system (GPS), or another type of satellite-based location system. The electronic controller 300 may use this information in conjunction with or in place of information received from some of the sensors 106 (for example, a speed of the semi-trailer truck 102 may be determined from information from the geo-location system 108 instead of from a speed sensor).

The communications network 112 is a communications network including wireless connections, wired connections, or combinations of both. The communications network 112 may be implemented using a wide area network, for example, the Internet, a Long-Term Evolution (LTE) network, a 4G network, 5G network and one or more local area networks, for example, a Bluetooth^{™} network or Wi-Fi network, and combinations or derivatives thereof.

The example illustrated in FIG. 1 provides but one example of the components and connections of the system 100. However, these components and connections may be constructed in other ways than those illustrated and described herein.

FIG. 3 is a block diagram of the electronic controller 300 of the system 100. The electronic controller 300 includes a plurality of electrical and electronic components that provide power, operation control, and protection to the components and modules within the electronic controller 300. The electronic controller 300 includes, among other things, an electronic processor 305 (such as a programmable electronic microprocessor, microcontroller, or similar device), a memory 310 (for example, non-transitory, computer readable memory), an input/output interface 315, and a transceiver 325. The electronic processor 305 is communicatively connected to the memory 310, the input/output interface 315, and the transceiver 325. The input/output interface 315 includes a human machine interface (HMI) 330. The electronic processor 305, in coordination with the memory 310 and the input/output interface 315, is configured to implement, among other things, the methods described herein. It should be understood that some or all of the components, including additional components, of the controller 300 may be remote/dispersed from each other within the semi-trailer truck 102 and/or remote from the semi-trailer truck 102 (for example, part of the vibration sensor 104, the communications network 112, and/or a separate electronic computing device).

The memory 310 may be made up of one or more non-transitory computer-readable media and includes at least a program storage area and a data storage area. The program storage area and the data storage area can include combinations of different types of memory, such as read-only memory ("ROM"), random access memory ("RAM"), flash memory, or other suitable memory devices. The electronic processor 305 is coupled to the memory 310 and the input/output interface 315.

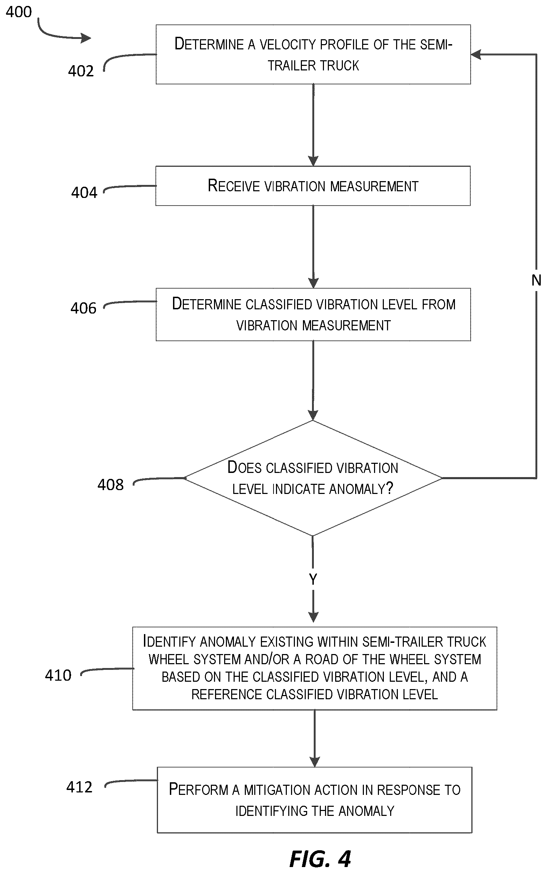

The electronic processor 305 sends and receives information (for example, from the memory 310 and/or the input/output interface 315) and processes the information by executing one or more software instructions or modules, capable of being stored in the memory 310, or another non-transitory computer readable medium. The software can include firmware, one or more applications, program data, filters, rules, one or more program modules, and other executable instructions. The electronic processor 305 is configured to retrieve from the memory 310 and execute, among other things, software for automatic detection/prediction of an anomaly within the wheel system 200 and for performing methods as described herein. In the example illustrated, the memory 310 stores, among other things, a vibration classification algorithm 320, which operates as described herein (for example, in regard to the method 400 described in regard to FIG. 4 below) to detect and classify vibration patterns to identify and/or predict anomalies within the wheel system 200.

The input/output interface 315 transmits and receives information from devices external to the electronic controller 300 (for example, over one or more wired and/or wireless connections), for example, components of the system 100 via one or more data buses and/or designated communication channels. The input/output interface 315 receives input (for example, from the vibration sensor 104 and the sensors 106 etc. ), provides system output (for example, to the transceiver 325 and/or the HMI 330, etc. , or a combination of both). The input/output interface 315 may also include other input and output mechanisms, which for brevity are not described herein and which may be implemented in hardware, software, or a combination of both.

The transceiver 325 includes a radio transceiver communicating data over one or more wireless communications networks (for example, cellular networks, satellite networks, land mobile radio networks, etc. ) including the communications network 112. The transceiver 325 may also provide wireless communications within the semi-trailer truck 102 using suitable network modalities (for example, Bluetooth^{™}, near field communication (NFC), Wi-Fi^{™}, and the like). Accordingly, the transceiver 325 communicatively couples the electronic controller 300 and other components of the system 100 with networks or electronic devices both inside and outside the semi-trailer truck 102. For example, the electronic controller 300, using the transceiver 325, can communicate with a one or more devices (for example, the other systems 110) over the communications network 112 to send and receive data, commands, and other information (for example, component anomaly notifications). The transceiver 325 includes other components that enable wireless communication (for example, amplifiers, antennas, baseband processors, and the like), which for brevity are not described herein and which may be implemented in hardware, software, or a combination of both. Some instances include multiple transceivers or separate transmitting and receiving components (for example, a transmitter and a receiver) instead of a combined transceiver.

As mentioned above, the input/output interface 315 includes the HMI 330. The HMI 330 provides visual output, such as, for example, graphical indicators (i. e. , fixed or animated icons), lights, colors, text, images, combinations of the foregoing, and the like. The HMI 330 includes a suitable display mechanism for displaying the visual output, such as, for example, an instrument cluster, a heads-up display, a center console display screen (for example, a touch screen, or other suitable mechanisms. In some instances, the HMI 330 displays a graphical user interface (GUI) (for example, generated by the electronic controller 300 and presented on a display screen) that enables a user to interact with one or more systems (and components thereof) the semi-trailer truck 102. The HMI 330 may also provide audio output to the user such as a chime, buzzer, voice output, or other suitable sound through a speaker included in the HMI 330 or separate from the HMI 330. In some instances, HMI 330 provides a combination of visual, audio, and haptic outputs. In some examples, the HMI 330 is implemented on a separate electronic device of a user or another third-party (for example, a semi-truck fleet operator or a maintenance service). The electronic device may be any kind of computing device such as a laptop, tablet, or a smart phone.

In some instances, the electronic controller 300 may be implemented in several independent controllers (for example, programmable electronic controllers) each configured to perform specific functions or sub-functions. For example, as mentioned above, one or more components of the controller 300 may be remote from the semi-trailer truck 102 (for example, part of a remote cloud-based server, which is not shown, of the communications network 112). Additionally, the electronic controller 300 may contain sub-modules that include additional electronic processors, memory, or circuits for handling input/output functions, processing of signals, and application of the methods listed below. In other instances, the electronic controller 300 includes additional, fewer, or different components. In some embodiments, one or more components of the electronic controller 300 are integrated into a dashboard (not shown) of the semi-trailer truck 102. Thus, the programs may also be distributed among one or more processors.

As will be described in further detail below, in some instances the memory 310 includes, among other things, computer executable instructions for detecting, predicting, and/or identifying one or more anomalies of the semi-trailer truck 102 and, in particular, of the wheel system 200 and of the road in which the semi-trailer truck 102 is driving on. Anomalies of the wheel system 200 may include, for example, physical defects or damage to one or more of the wheels 204 (for example, changes in wheel roundness, camber, caster, and toe; loose wheels, etc. ), the axle 206, the driveshaft 212, and the suspension and brake components (not shown) of the set 202 (for example, wheel bearings, the suspension system, etc. ). Anomalies in a road may also be detected by the system 100. In some instances, the computer executable instructions include instructions for training a machine or deep learning system to detect/predict one or more anomalies related to the system 200 of the semi-trailer truck 102.

In some instances, the electronic controller 300 uses one or more machine learning methods to analyze sensor information from the vibration sensor 104 to identify/predict anomalies within the wheel system 200 (as described herein). Machine learning generally refers to the ability of a computer program to learn without being explicitly programmed. In some instances, a computer program (for example, a learning engine) is configured to construct an algorithm based on inputs. Supervised learning involves presenting a computer program with example inputs and their desired outputs. The computer program is configured to learn a general rule that maps the inputs to the outputs from the training data it receives. Example machine learning engines include decision tree learning, association rule learning, artificial neural networks, classifiers, edge computing, inductive logic programming, support vector machines, clustering, Bayesian networks, reinforcement learning, representation learning, similarity and metric learning, sparse dictionary learning, and genetic algorithms. Using these approaches, a computer program can ingest, parse, and understand data and progressively refine algorithms for data analytics.

In some examples, the electronic processor 305 maintains a digital twin (stored in the memory 310) of the semi-trailer truck 102 or one or more components thereof. For example, in the illustrated example, the memory 310 includes a feature extraction 335. The electronic processor 305 provides detected semi-trailer truck attributes from the vibration sensor 104 and the sensors 106 to the digital twin as input. The generated data is used as an output to predict or simulate how one or more physical components of the wheel system 200 (for example, the wheel 204, the driveshaft 212, or the road) or another component or system of the semi-trailer truck 102 has been (or will be) affected by these inputs.

As mentioned above, in some instances, one or more components, including additional components (for example, additional components similar to those described above in regard to FIG. 3), of the electronic controller 300 may be positioned or distributed throughout the semi-trailer truck 102 or remote from the semi-trailer truck 102. In some examples the vibration sensor 104 is directly coupled to an electronic controller (for example, the electronic controller 300 or a separate electronic controller, which is not shown, which includes components similar to those of controller 300). The controller may include an electronic processor, memory, input/output interface, transceiver, and/or the like. The controller 300 (and/or the second controller) may include additional components such as a battery. In some examples, the vibration sensor 104 and the electronic controller are positioned on/within a card or circuit board (not shown). In addition, in some instances, the controller 300 wirelessly communicates with one or more other devices. For example, the electronic controller 300 communicates with one or more other electronic communication devices via the communications network 112.

FIG. 4 illustrates an example of a method 400 for predicting anomalies within a semi-trailer truck (for example, semi-trailer truck 102 of FIG. 1) and a road upon which the semi-trailer truck 102 is driven. Although the method 400 is described in conjunction with the system 100 as described herein, the method 400 could be used with other systems and semi-trailer trucks. In addition, the method 400 may be modified or performed differently than the specific example provided. As an example, the method 400 is described as being performed by the electronic controller 300 and, in particular, the electronic processor 305. However, it should be understood that in some instances, portions of the method 400 may be performed by other devices or subsystems of the system 100. For example, in some examples, some or all of the steps of the method 400 are performed between the remote server 114 and the electronic controller 300.

At block 402, the electronic processor 305 determines a velocity profile of the semi-trailer truck 102. The velocity profile is a series of speed measurements indicative of whether the semi-trailer truck 102 is accelerating from a stopped or a parked position or is decelerating. The electronic processor 305 may determine the velocity profile via one or more speed sensors of the semi-trailer truck 102 (for example, the speed sensor 107A). In some aspects, the electronic processor 305 derives the velocity profile of the semi-trailer truck 102 according to information from the geo-location system 108. The velocity profile of the semi-trailer truck 102 may be determined, in some aspects, from both the speed sensor 107A and the geo-location system 108.

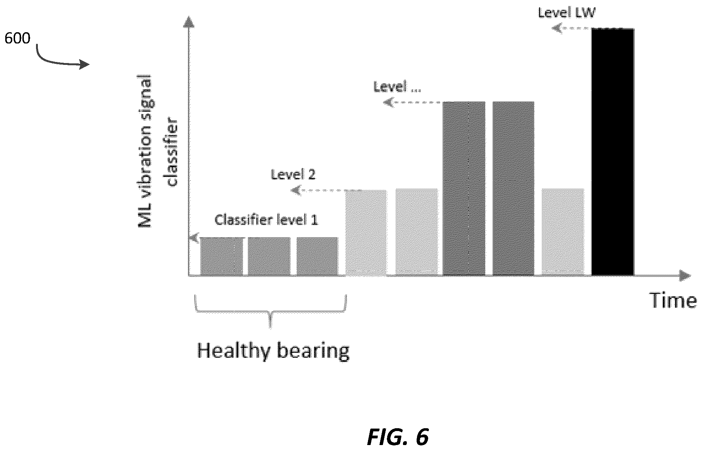

At block 404, the electronic processor 305 obtains, from the vibration sensor 104, a vibration measurement. The vibration measurement is, for example, a time series of measurements sampled at a particular sampling rate over a predetermined time interval. The electronic processor 305, at block 406, determines, from the vibration measurement, a classified vibration level including one or more labels indicating one or more characteristic features and/or data points of the vibration measurement. The classified vibration level is a categorization of at least one vibration measurement in time (for example, a determined level, as shown in FIG. 6, explained in more detail below). The electronic processor 305, for example, may provide the vibration measurement as input to the feature extraction 335 for classification of the vibration measurement.

The electronic processor 305, at block 408, then determines whether the classified vibration level is indicative of an anomaly. For example, as shown in FIG. 6 (explained in more detail below), in instances where the classified vibration level does not exceed a predetermined classification level (for example, a "level 1") for one or more consecutive vibration measurements, the electronic processor 305 may determine that an anomaly is not present. In instances where one or more classified vibration levels corresponding to a respective vibration measurement within a predetermined time period exceed one or more classified vibration level thresholds, the electronic processor 305 may determine that an anomaly may be present. In some instances, the electronic processor 305 may determine whether the classified vibration level is indicative of an anomaly based on the velocity profile. For example, a particular classified vibration level that is indicative of an anomaly may differ depending on whether the semi-trailer truck 102 is accelerating, decelerating, or is shifting into drive from park.

Returning to FIG. 4, the electronic processor 305, at block 410, identifies an anomaly existing in the wheel system 200, the road that the semi-trailer truck 102 is driving on, or both based on the classified vibration level and one or more of a reference classified vibration level. The reference classified vibration level includes one or more classified vibration levels derived from one or more vibration measurements corresponding a different anomaly case of one or more semi-trailer trucks. The reference classified vibration level may be received from (or derived based on vibration measurements received from) the one or more other semi-trailer truck anomaly detection systems 110, pre-stored in the memory 310, or some combination of both. The reference classified vibration level may be based on real-time data, simulation data, or both. The electronic processor 305, in some examples, performs the classification of the received vibration measurements according one or more machine-learning methods (for example, according to one or more additional digital twins of the respective other semi-trailer trucks). The reference classified vibration level is stored at the memory 310 and is compared with the classified vibration level for common or comparable labels/features. Based on detected correlations between particular members of the plurality of classified vibration levels, the electronic processor 305 may identify the particular anomaly present within the semi-trailer truck 102 (in particular, the wheel system 200). In some aspects, the electronic processor 305 further identifies the anomaly based on additional information. For example, the electronic processor 305 may further identify the anomaly based on the velocity profile of the semi-trailer truck 102.

FIG. 6 is a vibration signal classifier 600 for predicting a bearing anomaly, a wheel anomaly, or a road anomaly affecting the system 200 in accordance with some aspects. Depending on the particular vibration level pattern (i. e. , a series of levels corresponding to respective vibration measurements from the sensor 104 made consecutively in time) and the particular levels included within the pattern, the electronic processor 305 identifies whether and which kind of anomaly is affecting the system 200. For example, as illustrated, the classified vibration signal over time reaches a first classified vibration level (for example, "level 1") for a plurality of consecutive time intervals, which may indicate no anomalies. However, as explained in more detail below, a pattern between relatively low (and relatively high (for example, "level LW") levels may indicate a wheel anomaly. For example, as explained below, a sequence of two or more consecutive levels in the pattern exceeding the level LW threshold may indicate a loose or flat wheel.

In classifying the vibration measurements, the electronic processor 305, in some examples, is further configured to collect and utilize semi-trailer truck attributes from one or more additional semi-trailer trucks (for example, one or more of the other semi-trailer trucks of the other systems 110) in addition to received vibration measurements. Additional information may include, but is not limited to, location information, historic sensor information, and any information regarding a particular semi-trailer truck. The electronic processor 305 may further utilize the information in the determination of the potential anomaly within the wheel system 200, the road on which the semi-trailer truck 102 is driving on, or both. Such information, in particular, may be used to derive metadata for classification of the vibration measurement. Metadata may include, for example, the semi-trailer truck speed at the time of the vibration pattern, the model of semi-trailer truck 102 in which the vibration measurement was sensed, the state of the semi-trailer truck 102 at the time of the vibration pattern (for example, braking, accelerating, turning, trailer loading weight, etc. ), thermal and/or electrical characteristics of one or more of the systems of the semi-trailer truck 102, and environmental conditions at the time of the vibration pattern (for example, ambient temperature, ambient humidity, weather conditions, etc. ). Such information may be provided to the controller 300, for example, via the one or more sensors 106 of the semi-trailer truck 102. In examples where the electronic controller 300 also performs the classification of the vibration measurements from the other semi-trailer truck anomaly detection systems 110, the electronic controller 300 may also receive respective sensor information from the systems 110 and derive metadata for classification from the received sensor information.

The electronic processor 305 may, in some examples, perform at least partial processing of the received information from the sensors 106 and generate metadata for the classification of vibration measurements. In examples where the electronic controller 300 is partially implemented on the server 114, the electronic controller 300 may provide the vibration measurements, derived information, and metadata to the remote server 114 for classification. Identification of the anomaly may then be performed at the server 114.

Returning to FIG. 4, in response to identifying the anomaly, the electronic processor 305 performs a mitigation action at block 412. In some examples, the mitigation action includes transmitting (e. g. , via the transceiver 325) a notification to an electronic communications device (for example, a laptop, a smartphone, or a tablet) of a driver of the semi-trailer truck 102, a fleet manager, and/or a maintenance technician. For example, a suitable network message or API may be used to send a notification that indicates an anomaly has occurred, the time and place of the anomaly, the type of the anomaly, and the like.

In some examples, the mitigation action includes producing a visual and/or audio alert on a human machine interface of the semi-trailer truck 102 (e. g. , the HMI 330) to inform the driver (and any other passengers of the semi-trailer truck 102) of the anomaly and any other mitigation actions being taken. The alert may be an audio alert (for example, a buzzer or an alarm) or a visual alert (for example, a light or a text generated on a GUI), for example, generated by the HMI 330. For example, a display of the HMI 330 may display a message such as "LOOSE or FLAT WHEEL - STOP VEHICLE" or "WORN BRAKES. " In some examples, the HMI 330 may speak the alerts aloud to the driver and/or passengers of the semi-trailer truck 102. In some examples, a combination of alerts may be used.

In some examples, where ethe anomaly is caused by the semi-trailer truck 102 being driven on a rough road, in addition to or in place of a mitigation action, the electronic processor 305 may increment a counter or otherwise store information relating to for how long and for what distance the semi-trailer truck 102 is driven on a rough road.

In some examples, the mitigation action includes adjusting an operation of the semi-trailer truck 102. For example, the mitigation action may include operating the brakes of the semi-trailer truck 102, adjusting a suspension of the semi-trailer truck 102 (for example, by actuating one or more components of the suspension system), increasing or decreasing a speed of the semi-trailer truck 102, and the like. In some examples, the mitigation action includes placing one or more control systems of the semi-trailer truck 102 into a fault mode and/or disabling further use by the driver of the semi-trailer truck 102 of one or more control system(s) affected by the anomaly. In some instances, multiple mitigation actions are combined.

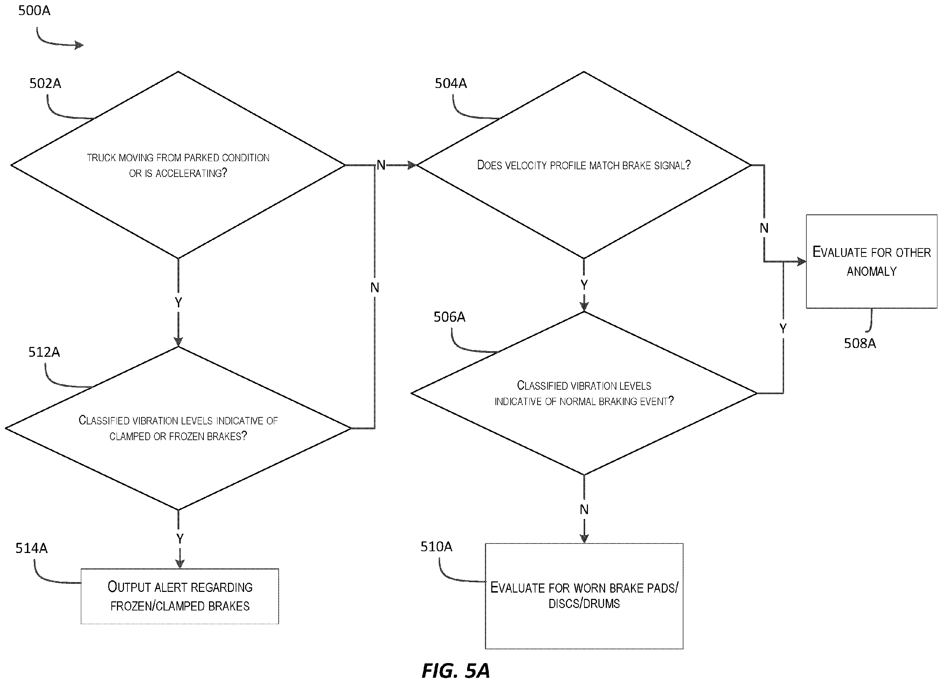

FIGS. 5A-5C each illustrate a flowchart of a method 500A, 500B, and 500C, respectively, for identifying s particular anomaly within the semi-trailer truck 102 or for the road upon which the semi-trailer truck 102 is driven. For example, the methods 500A, 500B, and 500C may be performed at block 412 in the method 400, described above with respect to FIG. 4.

FIG. 5A presents a method 500A for determining whether anomalies exist when the semi-trailer truck 102 is emerging from a parking condition. For example, temperatures at or below freezing can cause brakes or wheels to stay locked in position. Continued movement in such condition could cause damage to the semi-trailer truck 102. At block 502A, the electronic processor 305 determines whether the semi-trailer truck 102 is moving from a parked condition. For example, the electronic processor 305 may receive or determine a velocity value for the semi-trailer truck 102 that is greater than zero (e. g., from the speed sensor 107C). In another example, the electronic processor 305 may also determine that the semi-trailer truck 102 is moving by analyzing GPS data to create a velocity profile for the semi-trailer truck 102. The electronic processor 305, for example, may compare the velocity profile to one or more predetermined velocity profile patterns (each of which indication, for example, movement from a parked condition) to determine whether the semi-trailer truck 102 is accelerating or is moving away from a parked condition.

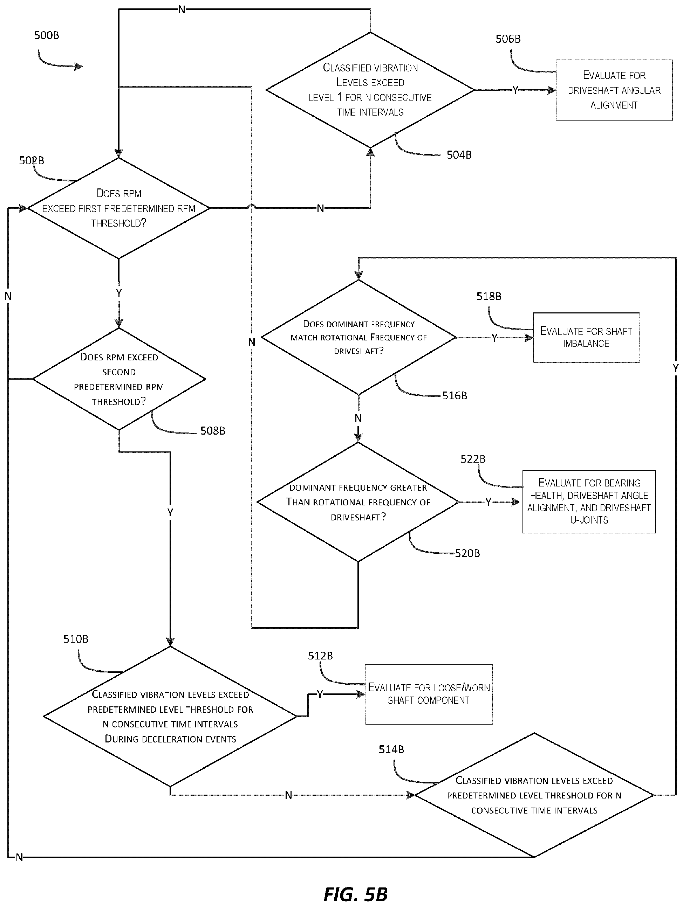

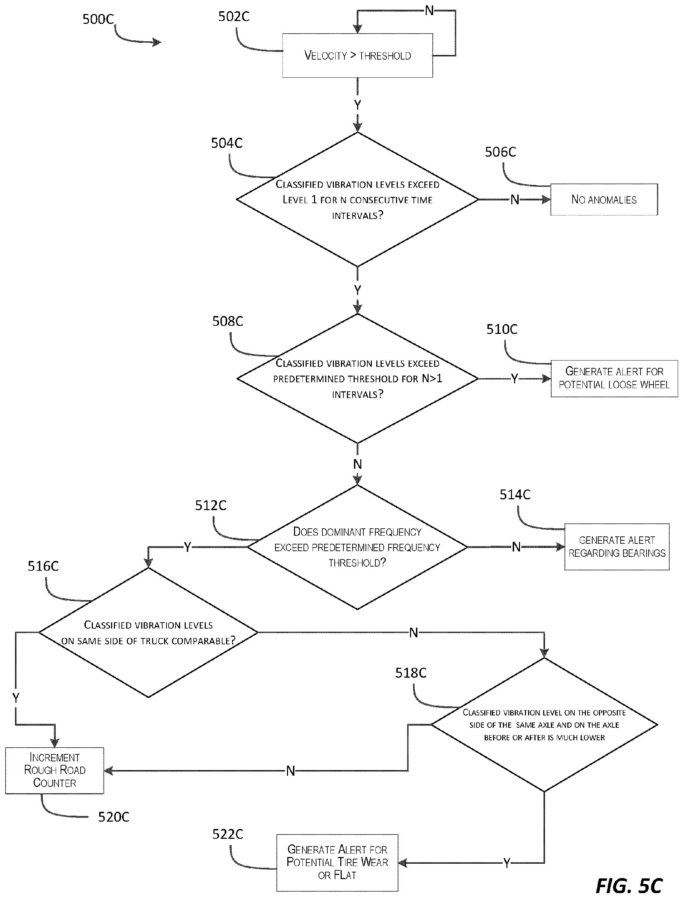

At block 504A, in instances where the electronic processor 305 determines that the semi-trailer truck 102 is not moving from a parked condition, the electronic processor 305 determines whether the velocity profile matches a brake signal of the semi-trailer truck 102. For example, the electronic processor 305 receives information regarding an applied brake signal (for example, from a vehicle control module (VCM), which is not shown, of the semi-trailer truck 102) and compares the signal to the velocity profile. In instances where the velocity profile does match the brake signal, (e. g., the velocity changes for the semi-trailer truck 102 correspond to what would be expected for the semi-trailer truck 102 when the brakes are applied according to the braking signal), the electronic processor 305 determines (at block 506A) whether the classified vibration level is comparable to a reference classified vibration level indicative of a normal braking event. In instances where the velocity profile does not match the brake signal (at block 504A) and in instances where the classified vibration levels are indicative of a normal braking event (at block 506A), the electronic processor 305 evaluates for other anomalies (for example, those described with regard to FIGS. 5B and 5C below), at block 508A. In instances where the classified vibration levels are not indicative of a normal braking event, the electronic processor 305, at block 510A, generates an alert to notify a driver and/or fleet manager of the semi-trailer truck 102. to evaluate for worn brake pads, discs, and/or drums of the semi-trailer truck 102.

Returning to block 502A, in instances where electronic processor 305 determines that the semi-trailer truck 102 is moving from a parked condition, the electronic processor 305, at block 512A, determines whether the classified vibration levels of the vibration measurement are indicative of clamped or frozen brakes. In instances where the classified vibration levels are not indicative of clamped or frozen brakes, the electronic processor 305 proceeds to block 504A of the method 500A. In instances where the classified vibration levels are indicative of frozen or clamped brakes, at block 514A, the electronic processor 305 generates an alert (for example, to a driver or a fleet manager of the semi-trailer truck 102).

Referring to FIG. 5B, the method 500B is for identifying whether the anomaly relates to a driveshaft (for example, the driveshaft(s) 212) of the semi-trailer truck 102, in accordance with some examples. At block 502B, the electronic processor 305 determines whether a rotations per minute (RPM) of the driveshaft 212 exceeds a first predetermined RPM threshold. The RPM of the driveshaft 212 may be determined directly via one or more of the sensors 106 or derived based on a vehicle speed of the semi-trailer truck 102, a wheel diameter, a differential gear ratio of the semi-trailer truck 102, a model of the semi-trailer truck 102, or some combination thereof. In instances where the RPM of the driveshaft 212 fails to exceed the first RPM threshold, the electronic processor 305 evaluates whether the classified vibration level exceeds a minimum classified level (i. e., level 1) for at least two or more ("N") consecutive time intervals (block 504B). When the electronic processor 305 determines that the classified vibration level exceeds the minimum classified level for at least two consecutive time intervals, the electronic processor 305 determines and evaluates for an anomaly with an angular alignment of the driveshaft 212 (at block 506B). In instances where the electronic processor 305 determines that the classified vibration level fails to exceed the minimum classified level for at least two consecutive time intervals, the electronic processor 305 returns to block 502B. In returning to block 502B (whether after performing block 504B or another block of the method 500B described below), the electronic processor 305 may use a different classified vibration level derived from a different vibration measurement from the vibration sensor 104.

Returning to block 502B, in instances where the electronic processor 305 determines that the RPM of the driveshaft 212 exceeds the first predetermined RPM threshold, the electronic processor 305, at block 508B, determines whether the RPM of the driveshaft 212 exceeds a second predetermined RPM threshold, the second predetermined RPM threshold being greater than the first predetermined RPM threshold. In instances where the electronic processor 305 determines that the RPM of the driveshaft 212 fails to exceed the second predetermined RPM threshold, the electronic processor 305 returns to block 502B. Otherwise, in instances where the electronic processor 305 determines that the RPM of the driveshaft 212 exceeds the second predetermined threshold, at block 510B, the electronic processor 305 evaluates whether the classified vibration level exceeds a first predetermined level threshold for two or more ("N") consecutive time periods during a deceleration event (for example, during braking of the semi-trailer truck 102). In instances where the classified vibration level exceeds a first predetermined level threshold for at least two consecutive time periods during a deceleration event, the electronic processor 305 determines and evaluates for an anomaly regarding a loose or worn shaft component (for example, a U-joint, which is not shown) of the driveshaft 212.

In instances where the classified vibration level fails to exceed the first predetermined level threshold for at least two consecutive time periods during a deceleration event, the electronic processor 305 determines whether the classified vibration level exceeds a second predetermined level threshold for at least two or more consecutive time intervals (block 514B). When the electronic processor 305 determines that the classified vibration level does not exceed the second predetermined level threshold for at least two consecutive time periods, the electronic processor 305 returns to block 502B. Otherwise, in instances where the electronic processor 305 determines that the classified vibration level does exceed the second predetermined level threshold for at least two consecutive time intervals, at block 516B, the electronic processor 305 determines whether a dominant frequency of the vibration measurement (a "vibration frequency") from the vibration sensor 104 matches a rotational frequency of the driveshaft 212. The rotational frequency of the driveshaft 212 may be measured via one or more of the sensors 106 or derived from information from a vehicle control unit or other vehicle system (not shown) of the semi-trailer truck 102.

In instances where the electronic processor 305 determines that the vibration frequency matches the rotational frequency of the driveshaft 212, the electronic processor 305 determines and evaluates for whether the anomaly relates to an imbalance of the driveshaft 212 (at block 518B). Otherwise, when the electronic processor 305 determines that the vibration frequency does not match the rotational frequency, the electronic processor 305 determines whether the vibration frequency is greater than the rotational frequency of the driveshaft 212 (at block 520B). In response to determining that the vibration frequency is greater than the rotational frequency of the driveshaft 212, the electronic processor 305, at block 522B, determines and evaluates whether the anomaly is related to a worn bearing, an angle misalignment of the driveshaft 212, a worn component of the driveshaft 212 (for example, a worn U-joint). The electronic processor 305 otherwise, in response to determining that the vibration frequency is not greater than the rotational frequency, returns to block 502B.

Referring to FIG. 5C, the method 500C is for identifying whether the anomaly relates to a wheel (for example, the wheel(s) 204), a bearing thereof, or of the road upon which the semi-trailer truck 102 is driven. At block 502C, the electronic processor 305 determines when a velocity of the semi-trailer truck 102 exceeds a predetermined threshold. When the velocity exceeds the predetermined threshold, at block 504C, the electronic processor 305 determines whether the classified vibration level is present (i. e., is equal to or is greater than level 1) for two or more consecutive time intervals. In instances where the classified vibration level is not present, the electronic processor 305 determines that no anomalies are present (block 506C) and repeats the method 400. In instances where the classified vibration level is determined to be present for two or more consecutive time intervals, the electronic processor 305, at block 508C, determines whether the classified vibration level exceeds a high-level threshold for two or more ("N") consecutive time periods. In instances where the classified vibration level is determined to exceed the high-level threshold, at block 510C, the electronic processor 305 identifies the anomaly as being a potential loose wheel and, in response, generates an alert regarding the potential loose wheel.

In instances where the classified vibration level is determined not to exceed the high-level threshold for two or more consecutive time periods, at block 512C, the electronic processor 305 determines whether a dominant vibration frequency (i. e., a peak frequency) derived from the vibration measurement of the classified vibration level exceeds a predetermined frequency threshold. In instances where the dominant vibration frequency does not exceed the predetermined threshold, the electronic processor 305, identifies that the anomaly is in regard to the bearings of the semi-trailer truck 102 and, at block 514C, generates an alert regarding the bearings. In instances where the dominant vibration frequency does exceed the predetermined threshold, the electronic processor 305, at block 516C, determines whether the classified vibration level from the vibration sensor 104 is comparable to one or more reference classified vibration levels derived from vibration measurements from vibration sensors on a same side of the semi-trailer truck 102 as the vibration sensor 104.

In instances where the classified vibration level is not comparable, the electronic processor 305, at block 518C, determines whether the classified vibration level from the vibration measurement of the sensor 104 is significantly greater than one or more reference classified vibration levels derived from vibration measurements from vibration sensors on an opposite side of the same axle 206 as the vibration sensor 104 and/or another axle of the semi-trailer truck 102. In instances where the classified vibration level is comparable to the reference classified vibration levels on the same side of the semi-trailer truck 102 (block 516C) or of the axle(s) 206 (block 518C), the electronic processor 305 determines that the anomaly is that the semi-trailer truck 102 is being driven on a rough road and, at block 520C, increments a counter indicating that the semi-trailer truck 102 has been traveling on a rough road for a particular distance and/or time. In instances where the electronic processor 305 determines that the classified vibration level is not comparable to the reference classified vibration levels of the axle(s) 206 at block 518C (e. g. , the classified level on a side of an axle is significantly lower than on the opposite side of the same axle and the classified levels for axles before or after the axle are significantly lower), the electronic processor 305, at block 522C, identifies the anomaly as a problem with the tire. For example, the tire may be out of round for some reason (e. g., the tire is unevenly worn, the tire belt is beginning to separate, on object may be lodged in the tire, etc. ). In another example, the electronic processor 305 may determine that the tire is flat or operating at a lower than standard tire pressure. The electronic processor 305, in some aspects, may generate an alert regarding the worn/flat tire.

Thus, the examples described herein provide, among other things, an anomaly detection system for a semi-trailer truck configured to detect/predict anomalies within a wheel system of the semi-trailer truck.

In the foregoing specification, specific examples, aspects, and features have been described. However, one of ordinary skill in the art appreciates that various modifications and changes can be made without departing from the scope of the aspects, examples, and features as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

In this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0. 5%. The term "coupled" as used herein is defined as connected, although not necessarily directly and not necessarily mechanically. A device or structure that is "configured" in a certain way is configured in at least that way but may also be configured in ways that are not listed.

Various features, aspects, advantages, and examples are set forth in the following claims.

## Claims

1. A system for predicting anomalies in a wheel system of a semi-trailer truck and a road upon which the semi-trailer truck is driven, the system comprising:
a vibration sensor positioned to sense vibrations of the wheel system; and
an electronic processor communicatively coupled to the vibration sensor, the electronic processor configured to:
determine a velocity profile of the semi-trailer truck;
obtain a vibration measurement;
determine, from the vibration measurement, a classified vibration level;
determine whether the classified vibration level is indicative of an anomaly;
identify, based on whether the classified vibration level is indicative of the anomaly and both the velocity profile and a reference classified vibration level, an anomaly existing within either or both of the semi-trailer truck wheel system or the road; and
perform a mitigation action in response to identifying the anomaly.

2. The system of claim 1, wherein determining the classified vibration level includes performing a simulation with a digital twin using the vibration measurement.

3. The system of claim 1, wherein the vibration sensor is positioned at a wheel of the wheel system.

4. The system of claim 3, wherein the electronic processor is further configured to determine whether the classified vibration level exceeds a predetermined vibration level threshold for at least two consecutive time intervals.

5. The system of claim 4, wherein identifying the anomaly includes evaluating whether a reference classified vibration level from a second vibration sensor is comparable to the classified vibration level, wherein the second vibration sensor is positioned at an axle of the wheel of the semi-trailer truck.

6. The system of claim 5, wherein the electronic processor determines that the anomaly is a roughness of the road in response to the reference classified vibration level from the second vibration sensor being comparable to the classified vibration level.

7. The system of claim 5, wherein the electronic processor determines that the anomaly is a worn or flat tire in response to the reference classified vibration level from the second vibration sensor not being comparable to the classified vibration level.

8. The system of claim 1, wherein identifying the anomaly further includes comparing a dominant frequency of the vibration measurement with a rotational frequency of a driveshaft of the truck.

9. The system of claim 8, wherein the electronic processor determines that the anomaly is related to the driveshaft in response to the dominant frequency being equal to or greater than the rotational frequency.

10. The system of claim 1, wherein identifying the anomaly includes:
comparing the velocity profile of the semi-trailer truck to an applied brake signal of the semi-trailer truck,
in response to the velocity profile being consistent with the applied brake signal, evaluating whether the classified vibration level is comparable to a reference classified vibration level indicative of a normal braking event, and
in response to the classified vibration level not being comparable to the reference classified vibration level indicative of the normal braking event, determining that the anomaly is related to a worn brake pad, disk, and/or drum.

11. A method for predicting anomalies in a wheel system of a semi-trailer truck and a road upon which the semi-trailer truck is driven, the method comprising:
determining, with an electronic processor, a velocity profile of the semi-trailer truck;
obtaining, from a vibration sensor positioned to sense vibrations of the wheel system, a vibration measurement;
determining, from the vibration measurement, a classified vibration level;
determining whether the classified vibration level is indicative of an anomaly;
identifying, based on whether the classified vibration level is indicative of the anomaly and both the velocity profile and a reference classified vibration level, an anomaly existing within either or both of the semi-trailer truck wheel system or the road; and
performing a mitigation action in response to identifying the anomaly.

12. The method of claim 11, wherein determining the classified vibration level includes performing a simulation with a digital twin using the vibration measurement.

13. The method of claim 11, wherein the vibration sensor is positioned at a wheel of the wheel system.

14. The method of claim 13, further comprising:
determining whether the classified vibration level exceeds a predetermined vibration level threshold for at least two consecutive time intervals.

15. The method of claim 14, wherein identifying the anomaly includes evaluating whether a reference classified vibration level from a second vibration sensor positioned at an axle of the wheel of the semi-trailer truck is comparable to the classified vibration level.

16. The method of claim 15, further comprising determining that the anomaly is a roughness of the road in response to the reference classified vibration level from the second vibration sensor being comparable to the classified vibration level.

17. The method of claim 15, further comprising determining that the anomaly is a worn or flat tire in response to the reference classified vibration level from the second vibration sensor not being comparable to the classified vibration level.

18. The method of claim 11, wherein identifying the anomaly further includes comparing a dominant frequency of the vibration measurement with a rotational frequency of a driveshaft of the truck.

19. The method of claim 18, further comprising determining that the anomaly is related to the driveshaft in response to the dominant frequency being equal to or greater than the rotational frequency.

20. The method of claim 11, wherein identifying the anomaly includes:
comparing the velocity profile of the semi-trailer truck to an applied brake signal of the semi-trailer truck,
in response to the velocity profile being consistent with the applied brake signal, evaluating whether the classified vibration level is comparable to a reference classified vibration level indicative of a normal braking event, and
in response to the classified vibration level not being comparable to the reference classified vibration level indicative of the normal braking event, determining that the anomaly is related to a worn brake pad, disk, and/or drum.
